# EUROPEAN PATENT APPLICATION

(11) **EP 4 564 832 A1**
(43) Date of publication of application: **04.06.2025**
(21) Application number: 24182315.2
(22) Date of filing: 14.06.2024
(51) Int. Cl.: H04N 21/443, H04N 21/81

(54) **VIDEO PROCESSING METHOD BASED ON PLUGIN AND VIDEO PROCESSING SYSTEM UTILIZING THE SAME**

(30) Priority: 30.11.2023 US 202318525753
(71) Applicant: MediaTek Inc., Hsin-Chu 300 (TW)
(72) Inventor: WANG, Chun-Kai, 30078 Hsinchu City (TW); HSU, Yeong-Cherng, 30078 Hsinchu City (TW)
(74) Representative: Hoefer & Partner Patentanwälte mbB

(57) **Abstract**

A video processing method (2) comprises an application receiving a video (S201), a media framework sending a command and the video (S202), a video decoder decoding the video to generate a decoded video (S203), a first plugin receiving the decoded video and outputting a first plugin output according to the command (S204). The first plugin is modified without affecting functions of at least the application, the media framework, and the video decoder.

## Description

### Background

The invention relates to video post-processing, and in particular, to a video post-processing method based on plugins.

Video post-processing is a process of improving a quality of a video during video playback. Video playback is a process of reproducing the video on a screen. In practice, different video post-processing algorithms may be required depending on the actual needs, so the video post-processing algorithm needs to be customized accordingly.

In the prior art, when modifying the video post-processing algorithm, the media platform and the media framework need to be modified accordingly, thus increasing labor costs. Since the algorithm and the platform can be developed and modified by different developers, the quality of the platform is difficult to control and maintain. In the prior art, when the platform is modified, the algorithm may need to be modified accordingly, thus reducing development efficiency.

### Summary

A video processing method and video processing system according to the invention are defined in the independent claims. The dependent claims define preferred embodiments thereof. According to an embodiment of the invention, a video processing method comprises an application receiving a video, a media framework sending a command and the video, a video decoder decoding the video to generate a decoded video, a first plugin receiving the decoded video and outputting a first plugin output according to the command. The first plugin is modified without affecting functions of at least the application, the media framework, and the video decoder.

According to another embodiment of the invention, a video processing system includes an application module, a media framework module coupled to the application, a video decoder module coupled to the media framework and a first plugin module coupled to the video decoder. The application module is configured to receive a video. The media framework module is configured to send a command and the video. The video decoder module is configured to decode the video to generate a decoded video. The first plugin module is configured to receive the decoded video and output a first plugin output according to the command. The first plugin module is modified without affecting functions of at least the application module, the media framework module, and the video decoder module.

These and other objectives of the present invention will no doubt become obvious to those of ordinary skill in the art after reading the following detailed description of the preferred embodiment that is illustrated in the various figures and drawings.

### Brief Description of the Drawings

FIG. 1 shows a block diagram of a video processing system according to an embodiment of the present invention.
FIG. 2 shows a flowchart of a video processing method of the video processing system in FIG. 1.
FIG. 3 shows a block diagram of a video processing system according to another embodiment of the present invention.
FIG. 4 shows a flowchart of a video processing method of the video processing system in FIG. 3.
FIG. 5 shows a schematic diagram of a video processing system operating in a user scenario according to another embodiment of the present invention.
FIG. 6 shows a schematic diagram of the video processing system in FIG. 5 operating in another user scenario.
FIG. 7 shows a schematic diagram of the video processing system in FIG. 5 operating in yet another user scenario.
FIG. 8 shows a schematic diagram of a video processing system in FIG. 5 operating in still another user scenario.
FIG. 9 shows a message sequence chart of plugin API call according to an embodiment of the present invention.

### Detailed Description

As used herein, the term "module" may refer to software programs, hardware devices, or a combination thereof.

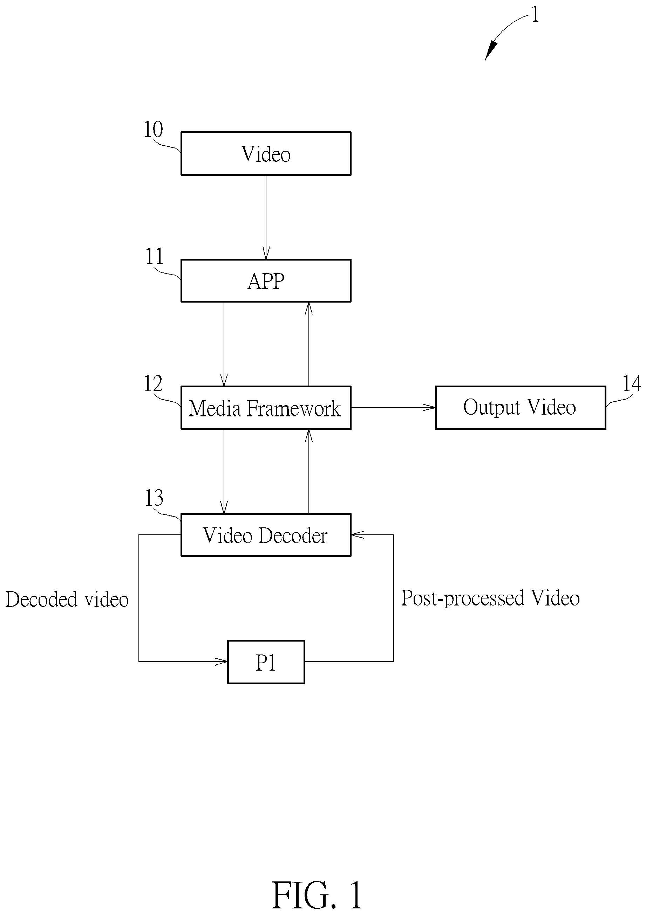

FIG. 1 shows a block diagram of a video processing system 1 according to an embodiment of the present invention. The video processing system 1 comprises an application module 11, a media framework module 12 coupled to the application module 11, a video decoder module 13 coupled to the media framework module 12, and a first plugin module P1 coupled to the video decoder 13. The application module 11 may receive a video 10 and send the video 10 to the media framework module 12. The media framework module 12 may send a command and the video 10 to the video decoder module 13. The command is issued by the user according to the user scenario to determine the functions that need to be performed on the video 10. The video decoder module 13 may decode the video 10 to generate a decoded video. The first plugin module P1 may receive the decoded video to perform video post-processing thereon according to the command and output a first plugin output. The video decoder module 13 may receive and pass the first plugin output to the media framework module 12, and the media framework module 12 may display an output video 14 according to the first plugin output. Preferably, the media framework module 12 may receive the first plugin output from the first plugin module P1 directly and display the output video 14 according to the first plugin output.

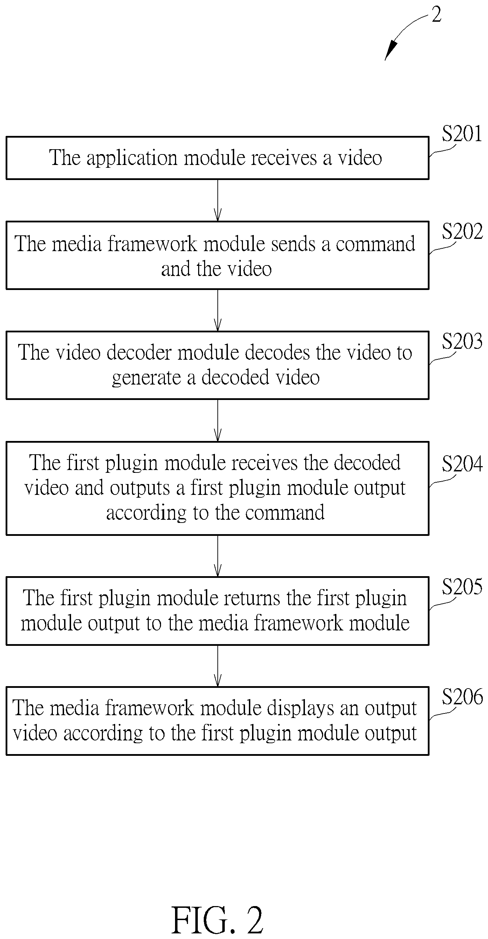

FIG. 2 shows a flowchart of a video processing method 2 of the video processing system 1. The video processing method 2 comprises Steps S201 to S206. Any reasonable step change or adjustment is within the scope of the disclosure. Steps S201 to S206 are explained as follows:
Step S201: The application module receives a video;
Step S202: The media framework module sends a command and the video;
Step S203: The video decoder module decodes the video to generate a decoded video;
Step S204: The first plugin module receives the decoded video and outputs a first plugin module output according to the command;
Step S205: The first plugin module returns the first plugin module output to the media framework module;
Step S206: The media framework module displays an output video according to the first plugin module output.

In Step S201, the application module 11 receives a video 10 and sends the video 10 to the media framework module 12. The application module 11 may be an Android Package (APK) file.

In Step S202, the media framework module 12 generates a command according to a user scenario and sends the command and the video 10 to the video decoder module 13 after receiving the video from the application module 11. The user scenario may refer to the needs of users in different situation. For example, poor network may cause the resolution of the video to drop, and algorithms need to be used to enhance the video quality.

In Step S203, the video decoder module 13 decodes the video 10 to generate a decoded video, and send the decoded video to the first plugin module P1. The decoded video comprises a plurality of decoded frames. Each frame is a still image. A motion picture is shown when the plurality of decoded frames are played in sequence during video playback.

In Step S204, the first plugin module P1 receives the decoded video and outputs a first plugin output according to the command. If the command indicates that the first plugin module P1 is selected, the first plugin module P1 performs a first function on the decoded video to generate the first plugin output. The first function can be image quality enhancement and/or video frame interpolation. If the command indicates the first plugin module P1 is not selected, the first plugin module P1 passes the decoded video to output the first plugin output without performing the first function.

The first plugin module P1 performs a video post-processing algorithm and may be modified without affecting functions of the application module 11, the media framework module 12, and the video decoder module 13. The first plugin module P1 may be modified, developed and tested independently without modifying the programs of the application module 11, the media framework module 12, and the video decoder module 13.

In Step S206, the media framework module 12 displays an output video 14 according to the first plugin output returned by the first plugin module P1.

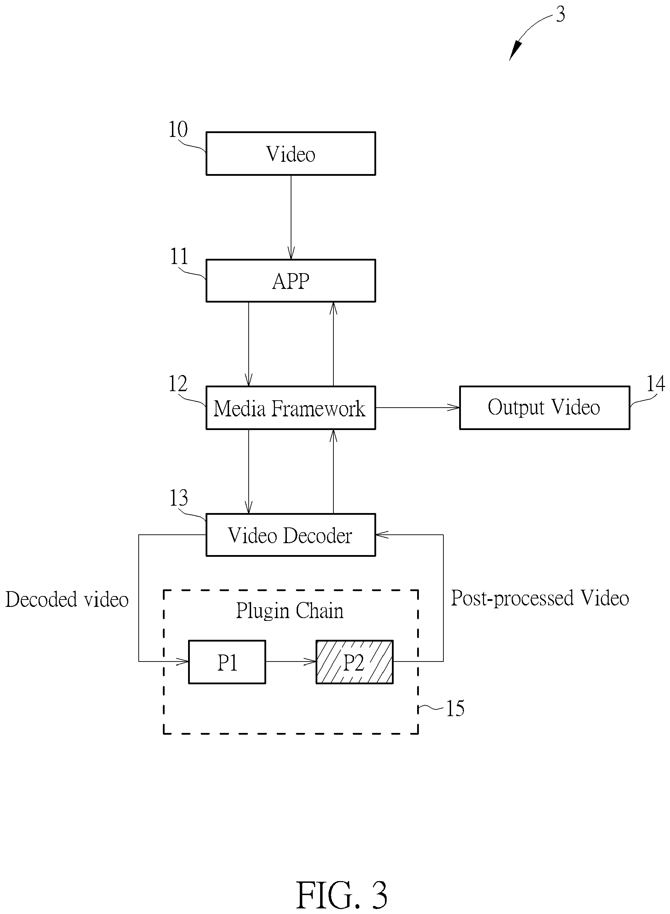

FIG. 3 shows a block diagram of a video processing system 3 according to another embodiment of the present invention. The video processing system 3 is similar to the video processing system 1 except that a plugin chain 15 is adopted to replace the first plugin module P1 in the video processing system 1. The following discussion will focus on the plugin chain 15, and the explanations for the other components of video processing system 3 can be found in the preceding paragraphs and will not be repeated here for brevity.

The plugin chain 15 comprises a first plugin module P1 and a second plugin module P2 connected in series. The first plugin module P1 and the second plugin module P2 are configured to perform video post-processing in sequence.

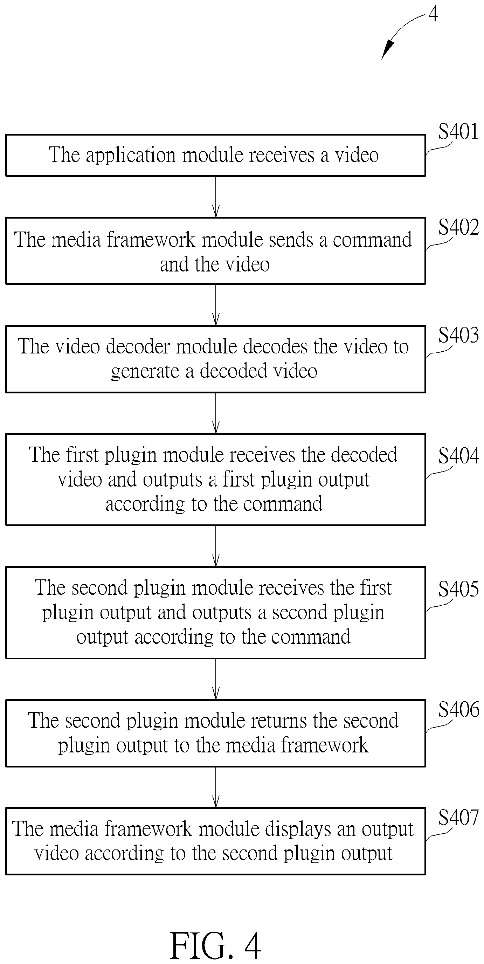

FIG. 4 shows a flowchart of a video processing method 4 of the video processing system 3. The video processing method 4 comprises Steps S401 to S407. Any reasonable step change or adjustment is within the scope of the disclosure. Steps S401 to S407 are explained as follows:
Step S401: The application module receives a video;
Step S402: The media framework module sends a command and the video;
Step S403: The video decoder module decodes the video to generate a decoded video;
Step S404: The first plugin module receives the decoded video and outputs a first plugin output according to the command;
Step S405: The second plugin module receives the first plugin output and outputs a second plugin output according to the command;
Step S406: The second plugin module returns the second plugin output to the media framework;
Step S407: The media framework module displays an output video according to the second plugin output.
Steps S401-S404 are similar to Steps S201-S204 and the explanation therefor will not be repeated here.

In Step S405, the second plugin module P2 receives the first plugin output and outputs a second plugin output according to the command. If the command indicates the second plugin module P2 is selected, the second plugin module performs a second function on the decoded video to generate the second plugin output. The second function can be image quality enhancement and/or video frame interpolation different from the first function. If the command indicates the second plugin module P2 is not selected, the second plugin module passes the decoded video to output the second plugin output without performing the second function.

The first plugin module P1 and the second plugin module P2 are video post-processing algorithms and each may be modified without affecting functions of the application module 11, the media framework module 12, the video decoder module 13, and the function(s) of the other plugin (s) . The first plugin module P1 and/or the second plugin module P2 may be modified, developed and tested independently without modifying the programs of the application module 11, the media framework module 12, the video decoder module 13, and the other plugins.

In Step S407, the media framework module 12 displays an output video 14 according to the second plugin output returned by the second plugin module P2.

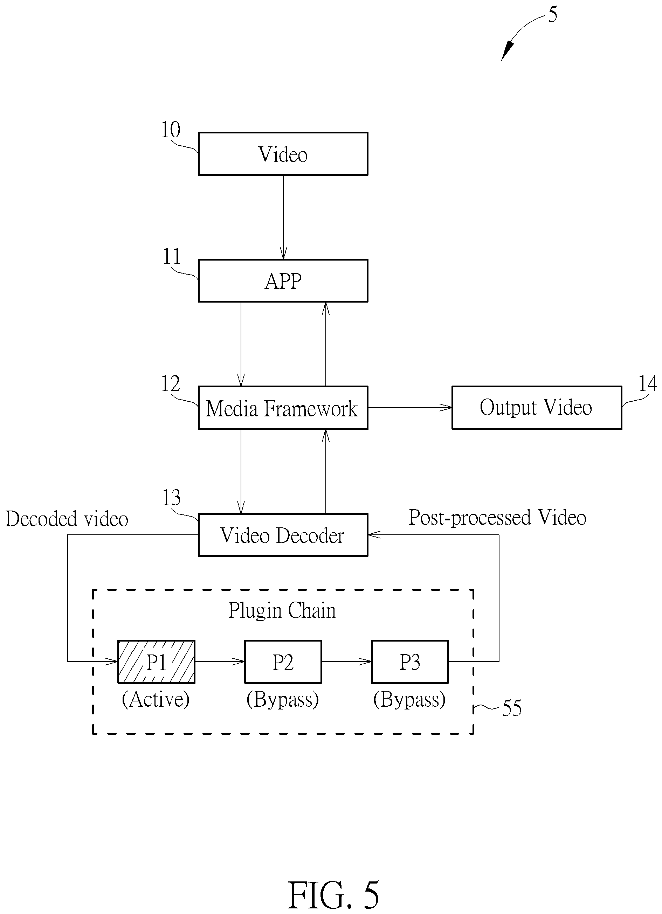

FIG. 5 shows a schematic diagram of a video processing system 5 operating in a user scenario according to another embodiment of the present invention. The video processing system 5 is similar to the video processing system 3 except that a plugin chain 55 is adopted to replace the plugin chain 15 in the video processing system 3. The following discussion will focus on the plugin chain 55, and the explanations for the other components of video processing system 5 can be found in the preceding paragraphs and will not be repeated here for brevity.

The plugin chain 55 comprises a first plugin module P1, a second plugin module P2 and a third plugin module P3 connected in series. The first plugin module P1, the second plugin module P2 and the third plugin module P3 are configured to perform video post-processing in sequence.

The media framework 12 generates a command according to a user scenario and sends the command and a video 10 to the video decoder module 13 after receiving the video 10 from the application module 11. In FIG. 5, the command indicates the first plugin module P1 is selected and the second plugin module P2 and the third plugin module P3 are not selected. Since the first plugin module P1 is selected, the first plugin module P1 performs the first function on the decoded video to generate the first plugin output. Since the second plugin module P2 is not selected, the second plugin module P2 passes the first plugin output without performing the second function to output a second plugin output. That is, the first plugin output bypasses the second plugin module P2 without being modified to generate the second plugin output. Since the third plugin module P3 is not selected, the third plugin module P3 passes the second plugin output without performing a third function to output a third plugin output. That is, the second plugin output bypasses the third plugin module P3 without being modified to generate the third plugin output. Then, the third plugin module P3 returns the third plugin output to the media framework module 12. In this embodiment, the third plugin output is the result of the decoded video after being processed by the first function.

The first plugin module P1, the second plugin module P2 and the third plugin module P3 are video post-processing algorithms and each may be modified without affecting functions of the application module 11, the media framework module 12, the video decoder module 13, and the functions of the other plugins. The first plugin module P1, the second plugin module P2, and/or the third plugin module P3 may be modified, developed and tested independently without modifying the programs of the application module 11, the media framework module 12, the video decoder module 13, and the other plugins. The first function, the second function and the third function may be different from each other and may be video processing functions such as image quality enhancement or video frame interpolation

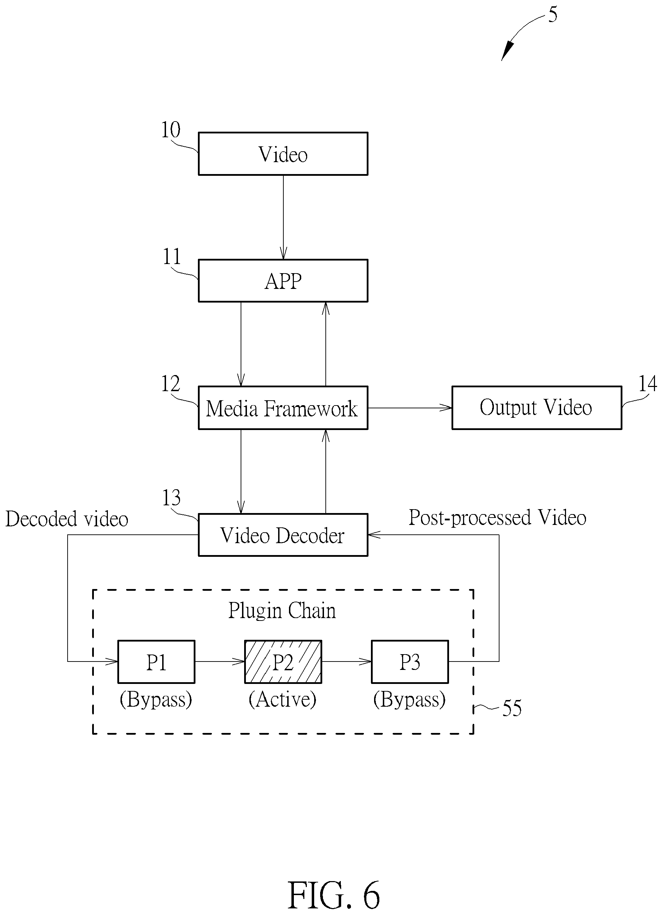

FIG. 6 shows a schematic diagram of the video processing system 5 operating in another user scenario. The media framework module 12 generates a command according to the other user scenario and sends the command and a video 10 to the video decoder module 13 after receiving the video 10 from the application module 11. In FIG. 6, the command indicates that the second plugin module P2 is selected and the first plugin module P1 and the third plugin module P3 are not selected. Since the first plugin module P1 is not selected, the first plugin module P1 passes the decoded video without performing the first function to output a first plugin output. That is, the decoded video bypasses the first plugin module P1 without being modified to generate the first plugin output. Since the second plugin module P2 is selected, the second plugin module P2 performs the second function on the first plugin output to generate a second plugin output. Since the third plugin module P3 is not selected, the third plugin module P3 passes the second plugin output without performing the third function to output a third plugin output. That is, the second plugin output bypasses the third plugin module P3 without being modified to generate the third plugin output. Then, the third plugin module P3 returns the third plugin output to the media framework module 12. In this embodiment, the third plugin output is the result of the decoded video after being processed by the second function.

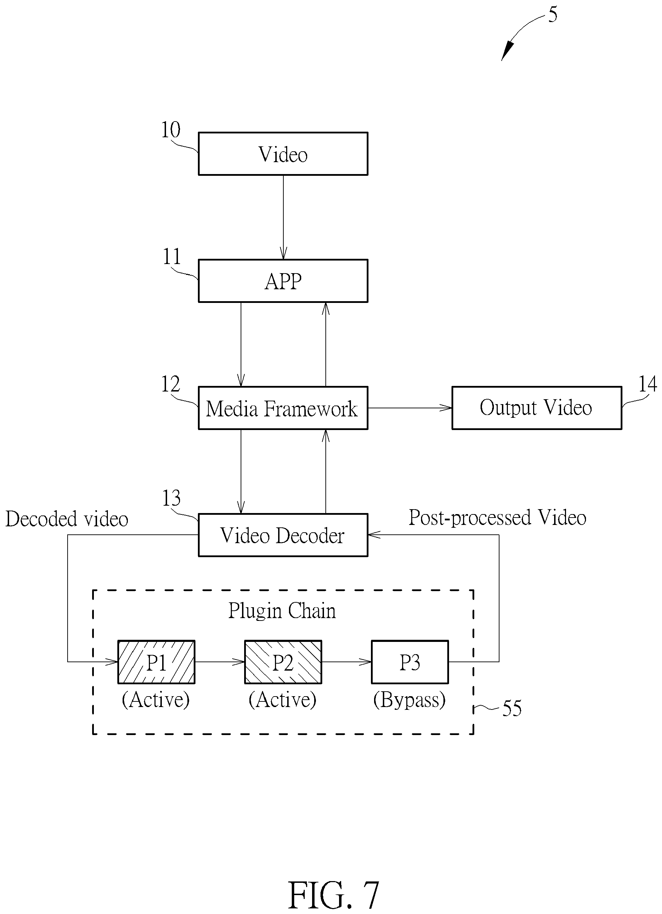

FIG. 7 shows a schematic diagram of the video processing system 5 operating in yet another user scenario. The media framework module 12 generates a command according to the other user scenario and sends the command and a video 10 to the video decoder module 13 after receiving the video 10 from the application module 11. In FIG. 7, the command indicates that the first plugin module P1 and the second plugin module P2 are selected and the third plugin module P3 is not selected. Since the first plugin module P1 is selected, the first plugin module P1 performs the first function on the decoded video to generate a first plugin output. Since the second plugin module P2 is selected, the second plugin module P2 performs the second function on the first plugin output to generate a second plugin output. Since the third plugin module P3 is not selected, the third plugin module P3 passes the second plugin output without performing a third function to output a third plugin output. That is, the second plugin output bypasses the third plugin module P3 without being modified to generate the third plugin output. Then, the third plugin module P3 returns the third plugin output to the media framework module 12. In this embodiment, the third plugin output is the result of the decoded video after being processed by the first function and the second function.

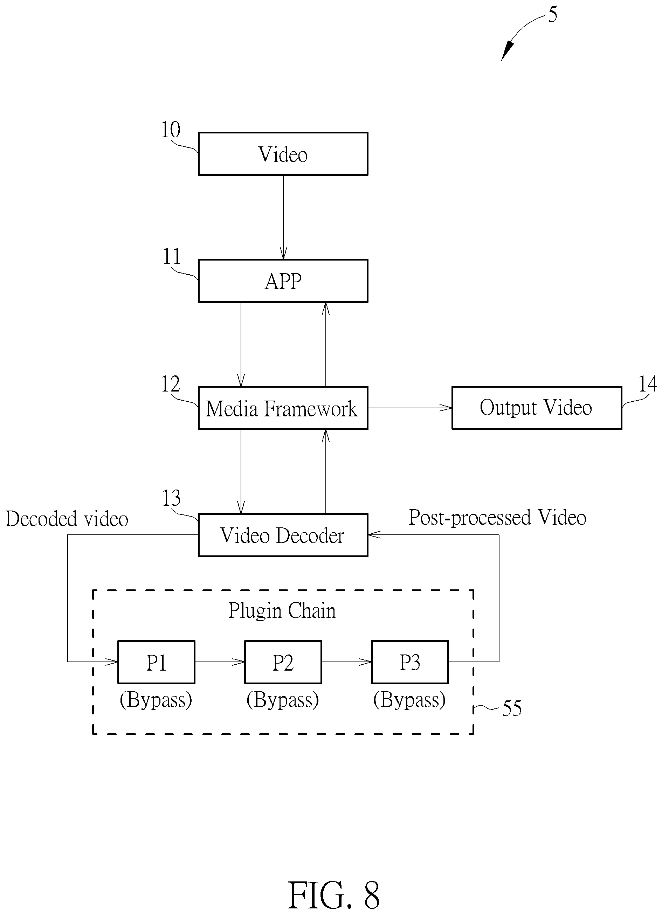

FIG. 8 shows a schematic diagram of the video processing system 5 operating in still another user scenario. The media framework 12 generates a command according to the other user scenario and sends the command and a video 10 to the video decoder module 13 after receiving the video 10 from the application module 11. In FIG. 6, the command indicates that the first plugin module P1, the second plugin module P2 and the third plugin module P3 are not selected. Since the first plugin module P1 is not selected, the first plugin module P1 passes the decoded video without performing the first function to output a first plugin output. That is, the decoded video bypasses the first plugin module P1 without being modified to generate the first plugin output. Since the second plugin module P2 is not selected, the second plugin module P2 passes the first plugin output without performing the second function to output a second plugin output. That is, the first plugin output bypasses the second plugin module P2 without being modified to generate the second plugin output. Since the third plugin module P3 is not selected, the third plugin module P3 passes the second plugin output without performing a third function to output a third plugin output. That is, the second plugin output bypasses the third plugin module P3 without being modified to generate the third plugin output. Then, the third plugin module P3 returns the third plugin output to the media framework module 12. In this embodiment, the third plugin output is the decoded video without being post-processed.

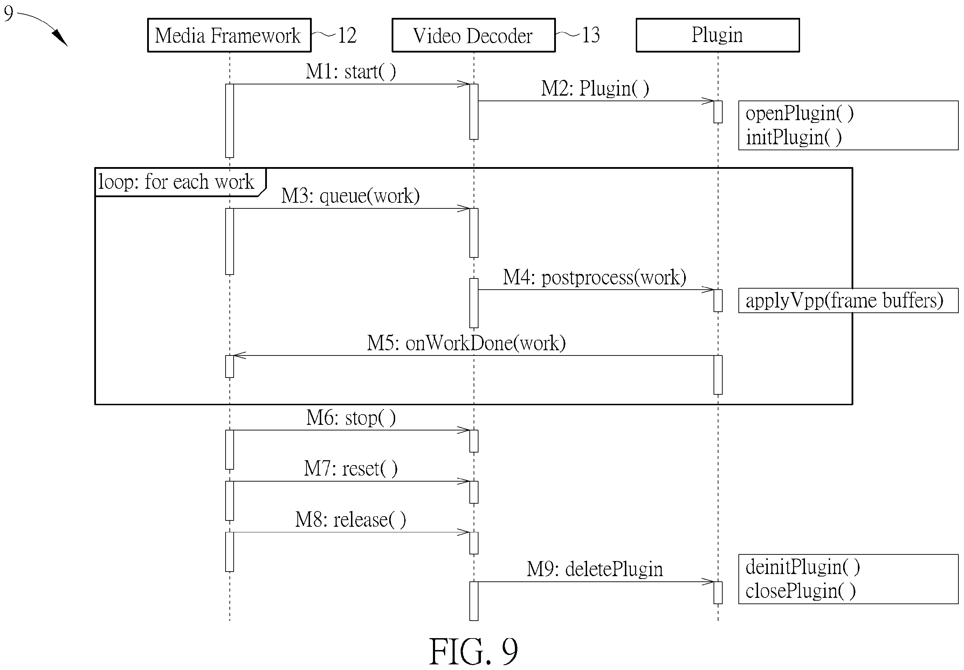

FIG. 9 shows a message sequence chart of plugin application programming interfaces (API) call sequence 9 according to an embodiment of the present invention. API is a way for one program to interact with another program. API calls are used to perform API interaction. An API call is a message requesting an API to provide services or information. The API call sequence 9 comprises the message M1 to M9 in sequence.

First, the media framework module 12 sends the message M1 (start()) to the video decoder module 13 to load a plugin. Second, the video decoder module 13 sends the message M2 (Plugin()) to the plugin to create a plugin instance (openPlugin()) and allocate the resources required for the plugin (initPlugin()). Third, for each work, the media framework module 12 sends the message M3 (queue (work)) to the video decoder module 13 to send the video need to be decoded to the video decoder module 13. Fourth, for each work, the video decoder module 13 sends the message M4 (postprocess (work)) to perform post-processing and the functions of the selected plugins on each frame of the decoded video (applyVpp(frame buffer)). Fifth, after post-processing, the plugin sends the message M5 (onWorkDone (work)) to the media framework module 12 to return the post-processed video. Sixth, the media framework module 12 sends the message M6 (stop()) to the video decoder module 13 to finish the work. Seventh, the media framework module 12 sends the message M7 (reset ()) to the video decoder module 13 to cancel all pending encodes and callbacks. Eighth, the media framework module 12 sends the message M8 (release()) to release the reserved resources. Ninth, the video decoder module 13 sends the message M9 (deletePlugin()) to the plugin to release the resource (deinitPlugin()) used by the plugins and delete the plugin instance (closePlugin()).

The embodiments of the invention disclose the video processing method and the video processing system using plugins to perform video post-processing. The video post-processing algorithm can be modified, developed and tested without affecting functions of the application module 11, the media framework module 12, the video decoder module 13, and the functions of the other plugins. Through the present invention, platform and algorithm maintenance become easier, and development efficiency is also improved.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A video processing method (2; 4) comprising:
an application module receiving a video (S201; S401);
a media framework module sending a command and the video (S202; S402);
a video decoder module decoding the video to generate a decoded video (S203; S403);
a first plugin module receiving the decoded video and outputting a first plugin output according to the command (S204; S404); and
modifying the first plugin module without affecting functions of at least the application module, the media framework module, and the video decoder module.

2. The method (2; 4) of Claim 1, wherein the first plugin module receiving the decoded video and outputting the first plugin output according to the command (S204; S404) comprises:
if the command indicates that the first plugin module is selected, the first plugin module performing a first function on the decoded video to generate the first plugin output; and/or
if the command indicates that the first plugin module is not selected, the first plugin module passing the decoded video to output the first plugin output.

3. The method (2; 4) of Claim 1 or 2, further comprising:
the media framework module generating the command according to a user scenario.

4. The method (2; 4) of any one of Claims 1 to 3, further comprising:
the first plugin module returning the first plugin output to the media framework module (S205).

5. The method (4) of any one of Claims 1 to 4, further comprising:
a second plugin module receiving the first plugin output and outputting a second plugin output according to the command (S405); and
wherein modifying the first plugin module without affecting the functions of at least the application module, the media framework module, and the video decoder module comprises: modifying the first plugin module without affecting the functions of the application module, the media framework module, and the video decoder module, and a second function of the second plugin module.

6. The method (4) of Claim 5, wherein the second plugin module receiving the first plugin output and outputting the second plugin output according to the command (S405) comprises:
if the command indicates that the second plugin module is selected, the second plugin module performing the second function on the first plugin output to generate the second plugin output; and/or
if the command indicates that the second plugin module is not selected, the second plugin module passing the first plugin output to output the second plugin output.

7. The method (4) of Claim 5 or 6, further comprising:
modifying the second plugin module without affecting the functions of the application module, the media framework module, and the video decoder module, and the first function of the first plugin module.

8. The method (4) of any one of Claims 5 to 7, wherein the first plugin module and the second plugin module are configured to perform video post-processing.

9. A video processing system (1; 5) comprising:
an application module (11) configured to receive a video (10) ;
a media framework module (12) coupled to the application module (11), and configured to send a command and the video (10) ;
a video decoder module (13) coupled to the media framework module (12), and configured to decode the video (10) to generate a decoded video; and
a first plugin module (P1) coupled to the video decoder (13), and configured to receive the decoded video and output a first plugin output according to the command;
wherein the first plugin module (P1) is modified without affecting functions of at least the application module (11), the media framework module (12), and the video decoder module (13).

10. The system (1; 5) of Claim 9, wherein:
if the command indicates that the first plugin module (P1) is selected, the first plugin module (P1) performs a first function on the decoded video to generate the first plugin output; and/or
if the command indicates that the first plugin module (P1) is not selected, the first plugin module (P1) passing the decoded video to output the first plugin output.

11. The system (1; 5) of Claim 9 or 10, wherein:
the media framework module (12) further generates the command according to a user scenario.

12. The system (5) of any one of Claims 9 to 11, further comprising:
a second plugin module (P2) coupled to the first plugin module (P1) and configured to receive the first plugin output and output a second plugin output according to the command; and
wherein the first plugin module (P1) is modified without affecting the functions of the application module (11), the media framework module (12), and the video decoder module (13), and a second function of the second plugin module (P2) .

13. The system (5) of Claim 12, wherein
if the command indicates that the second plugin module (P2) is selected, the second plugin module (P2) performs the second function on the first plugin output to generate the second plugin output; and/or
if the command indicates that the second plugin module (P2) is not selected, the second plugin module (P2) passes the first plugin output to output the second plugin output.

14. The system (5) of Claim 12 or 13, wherein:
the second plugin module (P2) is modified without affecting the functions of the application module (11), the media framework module (12), and the video decoder module (13), and first function of the first plugin module (P1).

15. The system (5) of any one of Claims 12 to 14, wherein the first plugin module (P1) and the second plugin module (P2) are configured to perform video post-processing.

## Amended claims

### Amended claims in accordance with Rule 137(2) EPC.

1. A video processing method (2; 4) comprising:
an application module receiving a video (S201; S401);
a media framework module sending a command and the video to a video decoder module (S202; S402);
the video decoder module decoding the video to generate a decoded video (S203; S403); and
a first plugin module receiving the decoded video and outputting a first plugin output according to the command (S204; S404);
**characterized by**:
modifying the first plugin module without affecting all functions of at least the application module, the media framework module, and the video decoder module.

2. The method (2; 4) of Claim 1, wherein the first plugin module receiving the decoded video and outputting the first plugin output according to the command (S204; S404) comprises:
if the command indicates that the first plugin module is selected, the first plugin module performing a first function on the decoded video to generate the first plugin output; and/or
if the command indicates that the first plugin module is not selected, the first plugin module passing the decoded video to output the first plugin output.

3. The method (2; 4) of Claim 1 or 2, further comprising:
the media framework module generating the command according to a user scenario.

4. The method (2; 4) of any one of Claims 1 to 3, further comprising:
the first plugin module returning the first plugin output to the media framework module (S205).

5. The method (4) of any one of Claims 1 to 4, further comprising:
a second plugin module receiving the first plugin output and outputting a second plugin output according to the command (S405); and
wherein modifying the first plugin module without affecting the functions of at least the application module, the media framework module, and the video decoder module comprises:
modifying the first plugin module without affecting the functions of the application module, the media framework module, and the video decoder module, and a second function of the second plugin module.

6. The method (4) of Claim 5, wherein the second plugin module receiving the first plugin output and outputting the second plugin output according to the command (S405) comprises:
if the command indicates that the second plugin module is selected, the second plugin module performing the second function on the first plugin output to generate the second plugin output; and/or
if the command indicates that the second plugin module is not selected, the second plugin module passing the first plugin output to output the second plugin output.

7. The method (4) of Claim 5 or 6, further comprising:
modifying the second plugin module without affecting the functions of the application module, the media framework module, and the video decoder module, and first function of the first plugin module.

8. The method (4) of any one of Claims 5 to 7, wherein the first plugin module and the second plugin module are configured to perform video post-processing.

9. A video processing system (1; 5) comprising:
an application module (11) configured to receive a video (10);
a media framework module (12) coupled to the application module (11), and configured to send a command and the video (10) to a video decoder module (13);
the video decoder module (13) coupled to the media framework module (12), and configured to decode the video (10) to generate a decoded video; and
a first plugin module (P1) coupled to the video decoder (13), and configured to receive the decoded video and output a first plugin output according to the command;
**characterized in that**
the first plugin module (P1) is configured to be modified such that all functions of at least the application module (11), the media framework module (12), and the video decoder module (13) are not affected.

10. The system (1; 5) of Claim 9, wherein:
if the command indicates that the first plugin module (P1) is to be selected, the first plugin module (P1) is configured to perform a first function on the decoded video to generate the first plugin output; and/or
if the command indicates that the first plugin module (P1) is not to be selected, the first plugin module (P1) is configured to pass the decoded video to output the first plugin output.

11. The system (1; 5) of Claim 9 or 10, wherein:
the media framework module (12) is further configured to generate the command according to a user scenario.

12. The system (5) of any one of Claims 9 to 11, further comprising:
a second plugin module (P2) coupled to the first plugin module (P1) and configured to receive the first plugin output and output a second plugin output according to the command; and
wherein the first plugin module (P1) is configured to be modified such that the functions of the application module (11), the media framework module (12), and the video decoder module (13), and a second function of the second plugin module (P2) are not affected.

13. The system (5) of Claim 12, wherein
if the command indicates that the second plugin module (P2) is to be selected, the second plugin module (P2) is configured to perform the second function on the first plugin output to generate the second plugin output; and/or
if the command indicates that the second plugin module (P2) is not to be selected, the second plugin module (P2) is configured to pass the first plugin output to output the second plugin output.

14. The system (5) of Claim 12 or 13, wherein:
the second plugin module (P2) is configured to be modified such that the functions of the application module (11), the media framework module (12), and the video decoder module (13), and first function of the first plugin module (P1) are not affected.

15. The system (5) of any one of Claims 12 to 14, wherein the first plugin module (P1) and the second plugin module (P2) are configured to perform video post-processing.
